# EUROPEAN PATENT APPLICATION

(11) **EP 1 419 997 A1**
(43) Date of publication of application: **19.05.2004**
(21) Application number: 01951960.2
(22) Date of filing: 23.07.2001
(51) Int. Cl.: C03C 17/34

(54) **LOW EMISSIVITY GLASS AND METHOD FOR PRODUCTION THEREOF**

(71) Applicant: Nippon Sheet Glass Company, Limited, Osaka-shi, Osaka 541-8559 (JP)
(72) Inventor: HYODO, Masato, c/o NIPPON SHEET GLASS CO., LTD., Osaka-shi, Osaka 541-8559 (JP); KIYOHARA, Koichiro, c/o NIPPON SHEET GLASS CO.,LTD, Osaka-shi, Osaka 541-8559 (JP)
(74) Representative: Power, Philippa Louise
(86) International application number: PCT/JP2001/006316
(87) International publication number: WO 2003/010104

(57) **Abstract**

The present invention provides a low emissivity glass including a first layer containing silicon oxide as its main component, a second layer containing tin oxide as its main component, a third layer containing silicon oxide as its main component, and a fourth layer containing tin oxide as its main component that are formed on a glass sheet with a thickness of at least 6 mm. The low-emissivity glass has a haze ratio of 0.7% or lower. In this low emissivity glass, the glass ribbon has a surface temperature of at least 700°C when the first layer is deposited and a surface temperature of at least 640°C when the second to fourth layers are deposited. It can be produced by a method involving thermal decomposition of a coating-film depositing material, for instance, by a CVD method.

## Description

### TECHNICAL FIELD

The present invention relates to a low emissivity glass, particularly a low emissivity glass with a thick glass sheet used therein.

### BACKGROUND ART

A glass sheet whose thermal emissivity is reduced through the formation of an electroconductive coating film on a glass sheet (a low emissivity glass; hereinafter referred to as a "Low-E glass") is useful for window glass of buildings. As the electroconductive film, great use is made of a film including a metal layer and a dielectric layer that are stacked alternately (a metal/dielectric multilayer film). Generally, the metal/dielectric multilayer film is deposited in a vacuum chamber by a sputtering method.

A coating film whose electroconductivity is improved by doping semiconductive oxide with impurities, for instance, a tin oxide film doped with fluorine, also decreases the emissivity of glass. This kind of oxide film can be deposited by a chemical vapor deposition (CVD) method, particularly a thermal CVD method carried out with a substrate being heated to a predetermined temperature. The Low-E glass with an oxide film, however, has problems to be solved when consideration is given to its use as window glass. One of the problems is glare caused due to the interference by the thin film. When the oxide film is formed so as to have a thickness required for decreasing the emissivity of window glass, interference colors cause the window glass to have an unfavorable appearance.

It has been well-known to form an interlayer between an electroconductive oxide film and a glass sheet in order to eliminate glare. For instance, JP58-501466A proposes a method of producing a non-glare structure by forming an interlayer between a glass sheet and an electroconductive oxide film, with the interlayer including a tin oxide film and a silicon oxide film that are disposed in this order from the glass sheet side. Example 2 described in JP58-501466A discloses a method of forming the above-mentioned interlayer on glass with an overcoat (a silicon oxide film) preformed thereon.

Another problem in the Low-E glass with an oxide film used therein is a high haze ratio. Particularly, the haze ratio of the Low-E glass produced by the thermal CVD method tends to rise with the increase in thickness of the glass sheet used as its substrate. A standard glass sheet used for window glass for ordinary houses has a nominal thickness of 3 mm. However, when using it in a high part of a building, a thicker glass sheet, for instance, a thick glass sheet with a thickness of at least 6 mm, is required in order to increase its wind-endurance. Such a sheet thickness also is required, for instance, for a large glass sheet that is used for a display window or in the vicinity of an entrance of a building.

When the silicon oxide overcoat disclosed in JP58-501466A is formed, the haze ratio can be decreased to a certain degree. However, the simple formation of the overcoat alone cannot prevent the appearance from becoming cloudy with the increase in thickness of the glass sheet. This is because the heat capacity of the glass sheet increases with the increase in its thickness and accordingly, during the deposition of the interlayer and the electroconductive oxide film by the thermal CVD method, this high heat capacity promotes the reaction locally together with the reaction heat generated during the film deposition.

The cloudy appearance caused due to a high haze ratio is one of the reasons why the Low-E glass with oxide films cannot dominate the Low-E glass with a metal/dielectric multilayer film in the market of window glass for buildings in spite of its low production cost.

### DISCLOSURE OF THE INVENTION

With the foregoing in mind, as a result of keen examinations, the inventors developed a Low-E glass with oxide films having a low haze ratio while using a thick glass sheet as its substrate. This Low-E glass includes a glass sheet with a thickness of at least 6 mm and a multilayer film formed thereon. The multilayer includes, sequentially from the glass sheet side, a first layer containing silicon oxide as its main component, a second layer containing tin oxide as its main component, a third layer containing silicon oxide as its main component, and a fourth layer containing tin oxide as its main component. The Low-E glass is characterized in having a haze ratio of 0.7% or lower while using the glass sheet with a thickness of at least 6 mm.

Generally, the cloudy appearance caused when the haze ratio is 1.0% or lower creates no practical problem. The present invention, however, allows the haze ratio to decrease to 0.7% or lower and thereby is intended to make the Low-E glass adaptable for use in locations or applications in which its appearance tends to cause problems. The Low-E glass having such a sufficiently low haze ratio can be obtained by forming the above-mentioned multilayer film while maintaining the glass sheet to be used as its substrate at a higher temperature.

That is, the present invention provides a method of producing a low emissivity glass in which a multilayer film is deposited on a glass ribbon with a thickness of at least 6 mm by a method involving thermal decomposition of a coating-film depositing material. In the method, as the multilayer film are deposited, sequentially from the glass ribbon side, a first layer containing silicon oxide as its main component, a second layer containing tin oxide as its main component, a third layer containing silicon oxide as its main component, and a fourth layer containing tin oxide as its main component. In the method, the glass ribbon has a surface temperature of at least 700°C when the first layer is deposited and a surface temperature of at least 640°C when the second to fourth layers are deposited.

In the temperature region that has been employed conventionally, it appears that the increase in heat capacity of the substrate with increase in thickness of the glass sheet affects the thermal decomposition reaction of the coating-film depositing material to result in an increase in the haze ratio of the Low-E glass. The detail is not clear, but it is conceived that since in the thermal decomposition reaction with a high substrate temperature as above mentioned, the heat dissipated from the substrate dominates the heat generated by the thermal decomposition reaction, the thermal decomposition reaction is prevented from being promoted locally and consequently, the increase in haze ratio is prevented.

A high temperature of 700°C or higher is too high as a temperature at which a pre-formed glass sheet is heated. When a film is deposited with the glass sheet being heated to such a high temperature, it is not possible to avoid softening of the glass sheet. However, when the thermal decomposition of the coating-film depositing material is carried out using a high temperature employed in the process of forming the glass sheet, the Low-E glass does not lose its commercial value. Furthermore, the film deposition carried out by the thermal CVD method allows a very dense silicon oxide overcoat having a smooth surface to be deposited.

The haze ratio is an index used commonly among persons skilled in the art. It is indicated with a numerical value obtained by dividing diffused-light transmittance by total light transmittance.

With respect to the silicon oxide and the tin oxide, there is no problem even if the ratio between Si (or Sn) and O is not always the stoichiometric ratio (1:2).

### BRIEF DESCRIPTION OF DRAWINGS

FIG. 1 is a drawing showing an example of a device used for carrying out the production method of the present invention.
FIG. 2 is a cross-sectional view showing an embodiment of a Low-E glass of the present invention.

### EMBODIMENTS OF THE INVENTION

Hereinafter, a preferred embodiment of the present invention is described with reference to the attached drawings.

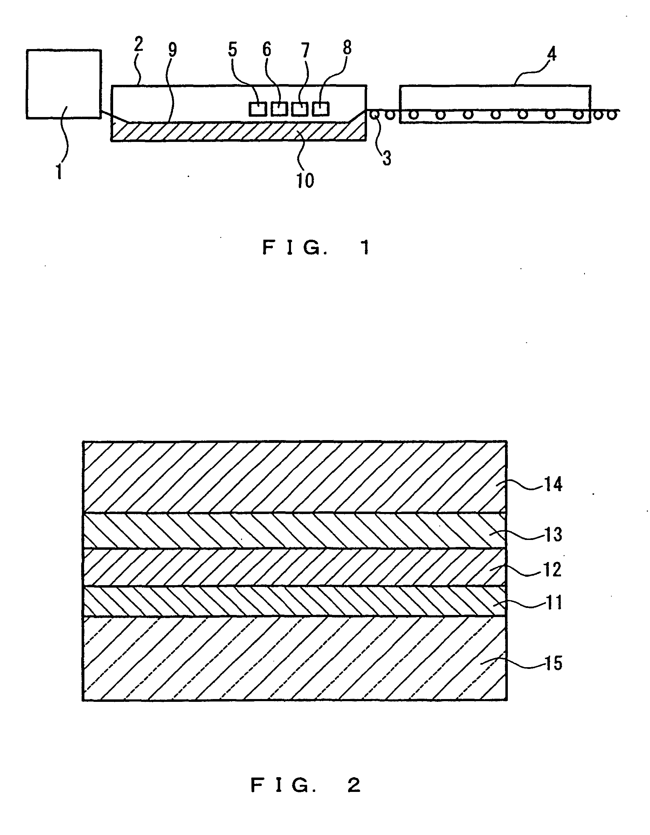

A Low-E glass of the present invention can be produced using the device exemplified in FIG. 1 by the thermal CVD method (an on-line CVD method) employed in the process of manufacturing so-called float glass. In this device are arranged sequentially a melting furnace 1 in which molten glass is held, a float bath 2 where the molten glass is formed into a belt-like form having a predetermined thickness on molten metal such as tin, a lift-out roller 3 for lifting the belt-like glass (glass ribbon) from the float bath, and an annealing furnace 4 for annealing the glass. Furthermore, in order to carry out the thermal CVD method, a plurality of sprayers 5, 6, 7, and 8 for feeding coating-film depositing materials are placed above a glass ribbon 9 inside the float bath 2.

The molten glass poured continuously from the melting furnace 1 into the float bath 2 is formed into the glass ribbon 9 with a predetermined width that is spread over the surface of a tin bath 10. The glass ribbon 9 traverses toward the outlet of the float bath while being cooled gradually. When reaching the vicinity of the outlet of the float bath, the glass ribbon has been cooled to about 600°C at which it is not deformed even when lifted by the roller. The sprayers (coaters) 5 to 8 are located in the places where the glass ribbon has a surface temperature of at least 640°C, for example, 640°C to 750°C. In the present specification, the surface temperature of the glass ribbon indicated with respect to each coater denotes the surface temperature that the glass ribbon has directly before reaching the coater concerned (i.e. on the upstream side relative to the coater concerned).

Preferably, the respective coaters are placed so that in terms of the surface temperature of the glass ribbon, the first coater 5 is located in a place where the surface temperature is 700 to 720°C, the second coater 6 in a place where the surface temperature is 660 to 720°C, particularly 680 to 700°C, the third coater 7 in the place where the surface temperature is 650 to 700°C, particularly 660 to 680°C, and the fourth coater 8 in the place where the surface temperature is 640 to 700°C, particularly 640 to 660°C.

These coaters move up and down freely. Their positions are determined according to the thickness of the glass sheet and the respective coating films to be deposited. The glass ribbon with coating films deposited thereon is cut into a glass sheet having a predetermined size on the further downstream side and thus a glass sheet is obtained. In this manner, the Low-E glass is produced continuously.

From the first coater 5, a Si-material containing gas to be used for depositing a silicon oxide film as the first layer is sprayed, for example, mixed gas containing monosilane, ethylene, and oxygen that is diluted with nitrogen. From the second coater 6, a Sn-material containing gas to be used for depositing a tin oxide film as the second layer is sprayed, for example, mixed gas containing dimethyltin dichloride (vapor), oxygen, and water that is diluted with nitrogen. From the third coater 7 is sprayed Si-material containing gas to be used for depositing a silicon oxide film as the third layer, for example, the same mixed gas as that used for depositing the first layer. From the fourth coater 8, a Sn-material containing gas to be used for depositing a tin oxide film doped with fluorine as the fourth layer is sprayed, for example, mixed gas containing dimethyltin dichloride (vapor), oxygen, nitrogen, and hydrogen fluoride (vapor).

As the silicon material to be used for depositing the silicon oxide film can be used, for example, silane-based compounds such as monosilane, disilane, trisilane, monochlorosilane, 1,2-dimethylsilane, 1,1,2-trimethyldisilane, and 1,1,2,2-tetramethyldisilane; tetramethyl orthosilicate; tetraethyl orthosilicate, etc. As an agent for oxidizing the silicon material can be used, for example, oxygen, water vapor, dry air, carbon dioxide, carbon monoxide, nitrogen dioxide, and ozone.

When a silane-based compound is used as the silicon material, unsaturated hydrocarbon such as ethylene, acetylene, toluene, etc. may be added to prevent the silane-based compound from reacting before the mixed gas reaches the surface of the glass substrate and to control the refractive index of the silicon oxide film.

Tetramethyltin, tetraethyltin, etc. may be used as the tin material to be used for depositing the tin oxide films, particularly the fourth layer. From the viewpoint of an improvement in electroconductivity, however, chlorine-containing tin compounds are preferable including, for instance, dimethyltin dichloride, monobutyltin trichloride, tin tetrachloride, dibutyltin dichloride, and dioctyltin dichloride. The use of a chlorine-containing tin compound as the tin material also allows the film growth rate to increase. As an agent for oxidizing the tin material can be used, for example, oxygen, water vapor, and dry air.

When fluorine is to be added, for example, hydrogen fluoride, trifluoroacetic acid, bromotrifluoromethane, or chlorodifluoromethane can be used as the fluorine material.

FIG. 2 is a cross-sectional view showing an example of a Low-E glass obtained by the on-line CVD method described above. On a glass sheet 15 made of soda-lime silica glass are deposited a first layer (SiO₂) 11, a second layer (SnO₂) 12, a third layer (SiO₂) 13, and a fourth layer (SnO₂ + F) 14 in this order.

It is preferable that the first layer has a thickness of at least 5 nm, particularly 5 nm to 10 nm, the second layer a thickness of 20 nm to 50 nm, the third layer a thickness of 20 nm to 50 nm, and the fourth layer a thickness of at least 25 nm, particularly about 32 nm to 38 nm.

The first layer serves as an alkali barrier. Particularly, when using a chlorine-containing material, a chloride produced by the reaction between chlorine and an alkaline component contained in the glass causes cloudiness. The alkali barrier, however, prevents the chloride from generating. The second layer and the third layer reduce glare of the Low-E glass. In order for these respective layers to exhibit their functions appropriately, it is preferable to set their thickness as described above.

It is preferable that the fourth layer is thicker in order to decrease the normal emissivity ε of the Low-E glass. Generally, the increase in thickness of the fourth layer is accompanied by roughening of the film surface due to the growth of crystal grains and therefore increases the haze ratio. As is apparent from the examples described below, however, according to the present invention, it is possible to obtain a Low-E glass having preferable characteristics of which a normal emissivity ε is lower than 0.15 on the surface where a multilayer film has been formed and a haze ratio is 0.7 or lower.

In the present specification, the normal emissivity ε is defined according to the prescription of Japanese Industrial Standard (JIS) R 3209.

The film structure of the Low-E glass according to the present invention is not limited to the type shown in FIG. 2. An additional coater or spray gun may be provided on the further downstream in the on-line CVD apparatus shown in FIG. 1, for example, between the float bath and the annealing furnace or inside the annealing furnace, to further form a thin film. A spray method also is one of the methods involving thermal decomposition of a coating-film depositing material. Examples of the spray method include a solution spray method, a dispersion spray method, and a powder spray method. A further coating film also may be stacked by additionally using a sputtering method or another method.

### EXAMPLES

### Example 1

Using the device shown in FIG. 1, the Si-material containing gas or Sn-material containing gas exemplified in the above was fed to the respective coaters to sequentially deposit a 10-nm thick silicon oxide film, a 25-nm thick tin oxide film, a 25-nm thick silicon oxide film, and a 35-nm thick fluorine containing tin oxide film on a 6-mm thick glass ribbon having a soda-lime silica glass composition. Thus, a Low-E glass was produced. The glass had a temperature of about 700°C directly before reaching the first coater, a temperature of about 690°C directly before reaching the second coater, a temperature of about 670°C directly before reaching the third coater, and a temperature of about 650°C directly before reaching the fourth coater.

### Example 2

A Low-E glass was produced in the same manner as in Example 1 except that the thickness of the first layer was set at 5 nm.

### Example 3

A Low-E glass was produced in the same manner as in Example 1 except that the thickness of the fourth layer was set at 20 nm.

### Comparative Example 1

A Low-E glass was produced in the same manner as in Example 1 except that the thickness of the first layer was set at 1 nm.

### Comparative Example 2

A Low-E glass was produced in the same manner as in Example 1 except that the glass was allowed to have a temperature of about 680°C directly before reaching the first coater and a temperature of about 630°C directly before reaching the fourth coater.

### Reference Example 1

A Low-E glass was produced in the same manner as in Comparative Example 2 except that the thickness of the glass sheet was set at 4 nm.

The haze ratio of each Low-E glass thus obtained was measured using an integrating sphere light transmittance measuring device (HGM-2DP, manufactured by Suga Test Instruments Co., Ltd.). The results are shown in Table 1.

**Table 1**

| | Haze Ratio (%) |
|---|---|
| Example 1 | 0.4 |
| Example 2 | 0.4 |
| Example 3 | 0.3 |
| Comparative Example 1 | 1.5 |
| Comparative Example 2 | 1.0 |
| Reference Example 1 | 1.2 |

The normal emissivity ε of each Low-E glass obtained in Examples 1 and 2 was measured and was 0.13, while that of the Low-E glass obtained in Example 3 was slightly higher than that and was 0.15. The glare caused in each Low-E glass was at the level that created no practical problems.

Even when the first layer is formed approximately as thick as that in Example 1, there is provided no effect of further reducing the haze ratio measured in Example 2. The first layer may have a thickness of less than 10 nm. As is apparent from Comparative Example 1, however, the first layer does not function effectively as an alkali barrier when having a thickness of less than 5 nm.

The Low-E glass of the present invention is intended to be used mainly as various kinds of glasses for buildings but also is suitable for window glass for vehicles, a freezing display case, etc. because it has excellent transparency.

### INDUSTRIAL APPLICABILITY

The present invention can provide a Low-E glass having excellent transparency for uses in which a thick glass sheet is required. According to the present invention, this Low-E glass can be produced continuously by the thermal CVD method that is excellent in production efficiency. The present invention increases the applicability of a Low-E glass with oxide films used therein and thus has a great utility value in the technical field concerned.

## Claims

1. A low emissivity glass, comprising a glass sheet with a thickness of at least 6 mm and a multilayer film formed thereon, the multilayer comprising, sequentially from a side of the glass sheet, a first layer containing silicon oxide as its main component, a second layer containing tin oxide as its main component, a third layer containing silicon oxide as its main component, and a fourth layer containing tin oxide as its main component,
wherein the low-emissivity glass has a haze ratio of 0.7% or lower.

2. The low emissivity glass according to claim 1, wherein the first layer has a thickness of at least 5 nm.

3. The low emissivity glass according to claim 1, wherein the second layer and the third layer each have a thickness of 20 to 50 nm.

4. The low emissivity glass according to claim 1, wherein the fourth layer has a thickness of at least 25 nm.

5. The low emissivity glass according to claim 1, wherein the fourth layer contains fluorine.

6. The low emissivity glass according to claim 1, wherein its surface where the multilayer has been formed has a normal emissivity of lower than 0.15.

7. The low emissivity glass according to claim 1, wherein the glass sheet is made of soda-lime silica glass.

8. A method of producing a low emissivity glass, comprising depositing a multilayer on a glass ribbon with a thickness of at least 6 mm by a method involving thermal decomposition of a coating-film depositing material,
wherein as the multilayer are formed, sequentially from a side of the glass ribbon, a first layer containing silicon oxide as its main component, a second layer containing tin oxide as its main component, a third layer containing silicon oxide as its main component, and a fourth layer containing tin oxide as its main component, and
the glass ribbon has a surface temperature of at least 700°C when the first layer is formed and a surface temperature of at least 640°C when the second to fourth layers are formed.

9. The method of producing a low emissivity glass according to claim 8, wherein the coating-film depositing material to be used for depositing the fourth layer contains a chlorine-containing tin compound.
